# EUROPEAN PATENT APPLICATION

(11) **EP 1 324 514 A2**
(43) Date of publication of application: **02.07.2003**
(21) Application number: 02026864.5
(22) Date of filing: 02.12.2002
(51) Int. Cl.: H04B 7/15

(54) **A repeater for use in a wireless communication system**

(30) Priority: 19.12.2001 US 20952
(71) Applicant: Radio Frequency Systems, Inc., Meriden, Connecticut 06450-7195 (US)
(72) Inventor: Carney, Paul, Phoenix, Arizona 85044 (US); Dinkel, Brian, Peoria, Arizona 85382 (US)
(74) Representative: Dreiss, Fuhlendorf, Steimle & Becker

(57) **Abstract**

A repeater system for transmitting and receiving RF signals to and from an area obstructed by a mountain, a building, etc. One antenna is linked to the base station antenna of, for example, a cell in a cellular network, and another antenna is directed to the obstructed area. Signals are received by one antenna from the base station antenna and digitally separated into a number of different frequency channels. The separated channels are then transmitted by the other antenna into the obstructed area to mobile users. Also, signals from the mobile users are received by one of the antennas and similarly digitally separated into different frequency channels and transmitted to the base station antenna for delivery to a communication network.

## Description

### Specification

### FIELD OF THE INVENTION

The invention relates generally to the field of repeater devices for radio-frequency (RF) communications signals used, for example, when large obstructions such as mountain ranges or even large buildings interfere with the signals. More particularly, the invention relates to a digital channelizer device within such a repeater used for digitally separating wideband RF signals into individual channels.

### BACKGROUND OF THE INVENTION

Wireless communication systems, such as cellular telephone systems, are now common almost everywhere around the world. As an example, one such cellular telephone system widely used around the world is the Advanced Mobile Phone Service (AMPS).

AMPS was released in 1983 using the 800-MHz to 900-MHz frequency band with a 30-kHz bandwidth for each channel and was introduced as a fully automated mobile telephone service. AMPS was the first standardized cellular service in the world and is likely the most widely used standard for cellular communications. AMPS was originally designed for use in cities, however, it was later expanded to rural areas. AMPS maximized the cellular concept of frequency reuse by reducing radio power output.

AMPS is used throughout the world and is particularly popular in the United States, South America, China, and Australia. AMPS uses frequency modulation (FM) for radio transmission. In the United States, transmissions from a mobile unit to a cell site, or base station, use different frequencies than transmissions from the base station to the mobile unit.

For example, the 825 - 845 MHz band is used for uplink service, i.e., for sending signals from a mobile user to a cell site, and the 870 - 890 MHz band is used for downlink service, i.e., for sending signals from the cell site to the mobile user. One 30 kHz band selected from the uplink bandwidth and one corresponding 30 klHz band selected from the downlink bandwidth comprise a single channel to effect communications between a mobile user and the cell site. Therefore, theoretically, there exists 666 (20 Mhz/30 kHz) individual channels available for bi-directional communications between mobile users and a cell site. In other words, assuming no frequency can be used simultaneously by more than one mobile user, only 666 different connections between mobile user and cell site can be held at any given time. This limited number is clearly insufficient given the present popularity of mobile wireless communication.

Thus, in order to increase the number of potential mobile users, the concept of frequency reuse was developed whereby each uplink and downlink channel band could be utilized simultaneously by different users. To reuse frequencies in this manner, however, the signals to/from one user must not interfere with the signals to/from any other user. To this end, geographic areas were divided into smaller "cells", each cell being serviced by a "cell-site", or antenna. The idea was that each user within a cell would be allocated both an available uplink frequency band, for sending signals to the respective cell-site, and an available downlink frequency band, for receiving signals from the respective cell-site. The uplink and downlink bands are allocated upon placing a mobile call and each cell could then, theoretically, reuse the entire 20 Mhz bandwidth. As long as no other user(s) within that particular cell communicates on that channel (or set of frequencies), no interference from another caller's signals occurs.

However, if a mobile user, utilizing one set of frequencies, travels close enough to the cell-site of an adjacent cell, his/her signals would potentially interfere with the signals of another user in that adjacent cell, assuming the other user is utilizing the same set of frequencies. Therefore, it was concluded that a given cell would not make available the same frequencies as an adjacent cell. Accordingly, groups of, for example seven, cells, called "clusters", were arranged. A cluster of hexagonal cells is arranged, for example, with one cell surrounded on each of its six sides by six other cells. To avoid interference, none of the seven cells in a cluster utilizes the same channels as any other cell in that cluster.

Therefore, in the example mentioned above, instead of having 666 available channels per cell, there would only be approximately 95 channels per cell (666 channels/7 cells). As users travel between cells, the channels, or frequencies, on which they transmit and receive their respective signals are changed in a manner to avoid using frequencies already in use by other users. Theoretically, if the cells are made small enough, enough capacity could be provided for all potential users.

However, as a result of smaller cell areas, the power levels used must correspondingly be lower, to avoid, for example, having one user's signals being inadvertently received by another cell-site (antenna) in a different cell. Further, as a result of the relatively low power levels and also because the wavelengths of the signals is short, obstructions such as buildings and mountains which may be present between the cell site and a user at various locations in a cell, can cause significant degradation in the signal levels, in some areas reducing them to unusable levels. Increasing the power of the signals may raise them to levels which are acceptable in those areas, or cells, but raising the power level too high could cause several other problems. In particular, while adjacent cells avoid using the same channels as those used in a given cell, at least some of the next closest cells will use the same channels. Thus, raising the power level in some cells may cause interference in those other cells. Furthermore, raising the power of a signal in one channel may cause interference between adjacent channels in adjacent cells.

In any event, increasing the power level of the signal transmitted from a cell site will not enhance the signal the cell site receives from the mobile unit. Indeed, since the mobile unit can be anywhere in the cell, including near the periphery of the cell, the amount of power that a mobile unit can transmit is limited at least by the criterion that the signal of the mobile unit not interfere with signals in nearby cells. Since a mobile unit located at, for example, the cell periphery, is closer to adjacent cells than is the cell site of the cell in which it is located, the limitations on signal power of a signal from a mobile unit are more pronounced than on signals from the cell site.

In some circumstances, automatic gain control circuits can be used to compensate for variations in the strength of received signals, but such circuits also tend to amplify noise, which can result in a very noisy audio signal if the received signal is significantly degraded. Furthermore, if the signal is too weak to be detected, the system may determine that the call has terminated and disconnect the other party or signal an error condition. Since this may occur numerous times as a mobile unit travels throughout a cell, it is desirable to enhance the signal level and also signal reception by cell equipment in areas of a cell which may otherwise be subject to obstruction.

One solution to the above-mentioned problems has been suggested in U.S. Patent Number 4,849,963 ("'963") in which a cellular radio telephone enhancement circuit is disclosed. In the enhancement circuit set forth in the '963 patent, an "upstream" antenna system and a "downstream" antenna system are provided. The upstream antenna system is directed at the cell site and is used for receiving the transmitted signal from the cell site and transmitting to the cell site an amplified version of the signal sent from the mobile unit. The downstream antenna system is directed at an obstructed area within a cell and is used for radiating an amplified signal from the cell site and for receiving signals from the mobile users located in the obstructed area.

However, one problem associated with the system disclosed in the '963 patent is that all of the system components are analog. Consequently, in a system in which multiple channels are used, many of the component parts must be duplicated, adding to the size and cost of the system. For example, multiple filters are required, one tuned for each frequency, or channel.

Although AMPS is widely used, the present trend is toward digital modulation techniques. For example, Time Division Multiple Access (TDMA) is a digital transmission technology that allows a number of users to access a single radio frequency (RF) channel without interference by allocating unique time slots to each user within each channel. The TDMA digital transmission scheme multiplexes three signals over a single channel. The current TDMA standard for cellular divides a single channel into six time slots, with each signal using two slots, providing a 3 to 1 gain in capacity over AMPS. Each caller is assigned a specific time slot for transmission.

However, when analog repeaters, such as the one described in the '963 patent above, are used to transmit digitally modulated RF signals, the problems increase. For example, when analog filters are used to separate channels in a repeater, the edges of the filter response are not very sharp. If the data is being transmitted digitally, this means that "ones" and "zeros" located at the fringe of the particular filter band have a higher likelihood of being lost, thus severely reducing the quality of the communication.

### SUMMARY OF THE INVENTION

The present invention seeks to obviate the above-mentioned problems with prior art systems by providing a wireless communication system repeater that includes a digital channelizer for calculating, measuring and optimizing system performance.

According to the present invention, a method and device are provided for transmitting and receiving radio frequency (RF) signals comprising, receiving a downlink RF signal from a base station antenna and directing the downlink RF signal to a digital channelizer. In the digital channelizer, the RF signals are digitally filtered into a number of sub bands of frequencies, each sub band comprising a respective number of channels. After the RF signals are separated into channels, the signals are transmitted into an area in which the base station, due to an obstruction, cannot transmit signals directly. The transmitted signals are then received by one or more mobile communication units.

Additionally, in accordance with the present invention, uplink signals from the mobile communication units are received by another antenna and digitally filtered in another digital channelizer into a number of uplink sub bands. Each of the uplink sub bands is then transmitted to the base station antenna from which it is sent to a communication network.

### BRIEF DESCRIPTION OF THE DRAWINGS

FIG. 1 is block diagram representation of a repeater system including a digital multiple channel channelizer in accordance with the present invention.
FIG. 2 is a block diagram representation of a single channel of a digital multiple channel channelizer in accordance with the present invention.

### DETAILED DESCRIPTION OF THE INVENTION

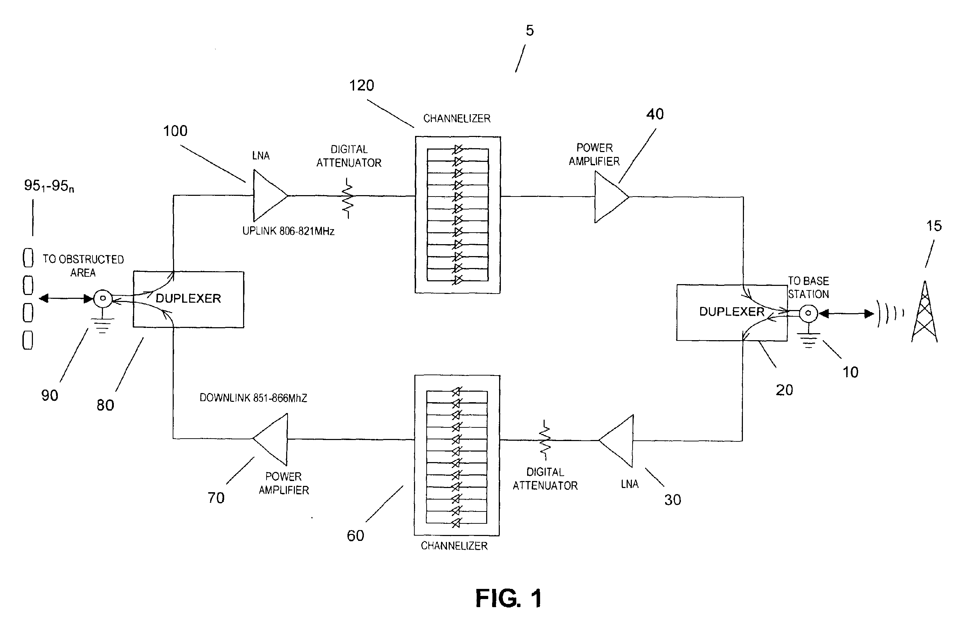

FIG. 1 is a system diagram representing the basic configuration of one embodiment of the present invention. A system in accordance with this embodiment of the invention is ideally positioned at a location where it can transmit and receive radio frequency (RF) signals both to and from a base station antenna as well as to and from an area where an obstruction, such as, a mountain, a series of buildings, etc., blocks signals transmitted from the base station antenna from entering directly. A system in accordance with this embodiment includes a downlink path, for transmitting amplified signals received from a base station antenna to an obstructed area where mobile users may be located, and an uplink path for transmitting amplified signals received from mobile users within the obstructed area to the base station antenna.

An example of a downlink path in accordance with the present embodiment will be discussed first. As shown in FIG. 1, system 5 includes an antenna 10 which receives RF signals from a base station antenna 15 located at a cell site. The signals received from the base station antenna 15 are directed to duplexer 20 which directs only the RF signals received by antenna 10 to an output of the duplexer.

From the output of the duplexer 20 the RF signals are provided to a low noise amplifier (LNA) 30 which increases the signal to noise ratio between signals within a certain frequency band, for example, the 851-866 mHz band, as well as any noise received along with the received signals and any noise introduced by the antenna 10 and/or duplexer 20. Subsequent to increasing the signal to noise ratio of the received signals in LNA 30, the band of signals is introduced to digital channelizer 60, the details of which are described in more detail below. Digital channelizer 60 receives the band of signals from LNA 30 and digitally divides the band of frequencies into a number of channels, e.g., 12 different channels each comprising a 30 kHz sub band of frequencies.

After the individual channels are separated by channelizer 60, each channel is directed to a power amplifier 70 for increasing the strength of the signal. The output of amplifier 70 is provided to a duplexer 80 which directs the signal received from amplifier 70 to antenna 90. Antenna 90 transmits the signal to the obstructed area in which mobile users 95₁-95ₙ are located.

An uplink path in accordance with the present embodiment will now be discussed. Antenna 90 receives various signals of different frequencies from mobile users 95₁-95ₙ within the obstructed area. The signals received by antenna 90 are then provided to duplexer 80 which directs the signals to a LNA 100 which increases the signal to noise ratio between signals within a certain frequency band, for example, the 806-821 mHz band, as well as any noise received along with the received signals and any noise introduced by the antenna 90 and/or duplexer 80. Subsequent to increasing the signal to noise ratio of the received signals in LNA 100, the band of signals is introduced to digital channelizer 120, the details of which are identical to those of channelizer 60 and which are described in more detail below. Digital channelizer 120 receives the band of signals from LNA 100 and digitally divides the band of frequencies into a number of channels, e.g., 12 different channels each comprising a 30 kHz sub band of frequencies.

After the individual channels are separated by channelizer 120, each channel is directed to a power amplifier 40 for increasing the strength of the signal. The output of amplifier 40 is provided to duplexer 20 which directs the signal received from amplifier 40 to antenna 10. Antenna 10 transmits the signal to the base station 15 from which it is then routed to a communication network (not shown).

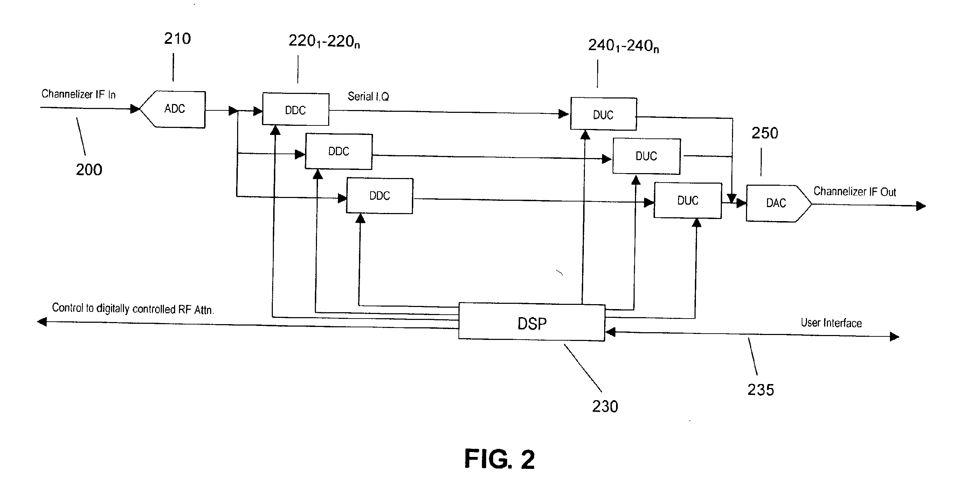

Both channelizers 60 and 120, in accordance with an embodiment of the present invention are implemented digitally, using digital filters, etc. to isolate the desired frequency signals. For example, as shown in FIG. 2, channelizers 60 and 120 (FIG. 1) receive a wideband of intermediate frequency (IF) signals 200 through an input port (not shown) and direct the entire band of IF signals to an analog to digital converter (ADC) 210 wherein the signals are converted from an analog format to a digital format.

After the IF band signals have been converted into a sampled digital representation, the digital signal is presented to a number of digital down converters (DDC) 220₁-220ₙ. DDCs 220₁-220ₙ are each capable of isolating at least one frequency sub band, or channel, from within the IF band represented by its digital input signal. For example, each channelizer channel may be configured to isolate a different 30 kHz sub band. An example of a DDC that can be used in conjuction with the present embodiment is a device by **Analog Devices,** part number AD6624.

Because the DDCs in accordance with the present embodiment utilize digital filters, the frequency or frequencies that each DDC operates on can be isolated by selecting the proper coefficients for the digital filters within. To assist in the proper selection of coefficients, a digital signal processor (DSP) 230 is provided within the channelizer device which is connected to each DDC. The DSP receives control data via a user interface 235 and processes the data to determine the frequency sub band which each DDC should operate on. Accordingly, the DSP determines the proper filter coefficients for the DDC.

After each of the DDCs isolates its selected frequency signal it outputs both an "in-phase" signal as well as a quadrature signal, i.e., a signal with the same frequency and amplitude as the in-phase signal but 90 degrees out of phase. The in-phase and quadrature signals are output as a series of "I" and "Q" samples. The I and Q samples are provided to a corresponding number of digital up converters (DUC) 240₁-240ₙ. An example of a DUC that can be used in conjunction with the present embodiment is a device by **Analog Devices,** part number AD6622. The DUCs recreate an output signal from the digital I and Q samples and present the output digital signals to a digital to analog converter (DAC) 250. The DAC 250 then outputs an IF representation of the signal filtered by the DDCs.

The present embodiment of the invention permits RF signals from, for example, a number of mobile cellular telephone users within an obstructed area to be able to transmit and receive signals from their respective mobile units to and from, respectively, a base station antenna serving a particular cell of the cellular network. Further, because the system of the present embodiment uses digital filtering techniques, the problems associated with conventional analog repeater systems are avoided. For example, in analog repeater systems, each channel requires its own filter and its own mixing stage individually tuned to a particular frequency, or channel. However, by utilizing digital filters, digital mixers, and numerically controlled oscillators (NCO's), according to the present invention, each NCO can be digitally controlled such that its "tuned" frequency can be changed merely by changing the coefficients, which can be done quickly under the control of a digital signal processor.

The above description of the preferred embodiments has been given by way of example. From the disclosure given, those skilled in the art will not only understand the present invention and its attendant advantages, but will also find apparent various changes and modifications to the structures and methods disclosed. It is sought, therefore, to cover all such changes and modifications as fall within the spirit and scope of the invention, as defined by the appended claims, and equivalents thereof.

## Claims

1. A repeater system for a wireless communication system comprising:
a first antenna operable to transmit an uplink radio frequency (RF) signal to, and receive a downlink RF signal from, a base station antenna;
a first duplexer connected to said first antenna and operable to receive the downlink RF signal from said first antenna and direct the downlink RF signal to a first duplexer output, and further operable to receive an amplified uplink signal at a first duplexer input and provide the amplified uplink signal to said first antenna for transmission to the base station antenna; and
a first digital channelizer operable to receive a wideband downlink signal including a plurality of downlink signals each having a different frequency, and digitally isolate a single downlink signal from among the plurality of downlink signals and provide the isolated downlink signal at a first digital channelizer output,
wherein the wideband downlink signal comprises a narrower band of frequencies than the downlink RF signal.

2. A repeater system as claimed in claim 1, further comprising:
a second antenna operable to transmit a downlink radio frequency (RF) signal to, and receive an uplink RF signal from, a mobile communication unit;
a second duplexer connected to said second antenna and operable to receive the uplink RF signal from said second antenna and direct the uplink RF signal to a second duplexer output, and further operable to receive an amplified downlink signal at a second duplexer input and provide the amplified downlink signal to said second antenna for transmission to the mobile communication unit; and
a second digital channelizer operable to receive a wideband uplink signal including a plurality of uplink signals, and digitally isolate a single uplink signal from among the plurality of uplink signals and provide the isolated uplink signal at a second digital channelizer output,
wherein the amplified downlink signal is an amplified version of the isolated downlink signal and the amplified uplink signal is an amplified version of the isolated uplink signal.

3. A repeater system as claimed in claim 2, wherein said first digital channelizer comprises:
an analog to digital converter for converting the wideband downlink signal from an analog format to a digital format;
at least one digital down converter operable to convert a digital wideband downlink signal of a specified frequency to a baseband quadrature version of the digital wideband downlink signal of the specified frequency; and
a digital signal processor for controlling said at least one digital down converter to operate at the specified frequency.

4. A repeater system as claimed in claim 3, wherein said first digital channelizer further comprises:
at least one digital up converter operable to receive the baseband quadrature version of the digital wideband downlink signal and produce a recreated wideband signal at the specified frequency; and
a digital to analog converter for converting the recreated wideband signal from a digital format to an analog format.

5. A method for transmitting and receiving radio frequency (RF) signals comprising:
receiving a downlink RF signal from a base station antenna;
directing the downlink RF signal to a first digital channelizer;
digitally filtering a plurality of sub bands of frequencies from the downlink RF and separating each sub band into a respective number of channels;
transmitting each of the channels into an area in which the base station, due to an obstruction, cannot transmit signals directly; and
receiving at least one of the channels by a mobile communication unit.

6. A method as claimed in claim 5, further comprising:
receiving an uplink RF signal from a mobile communication unit;
directing the uplink RF signal to a second digital channelizer;
digitally filtering a plurality of sub bands of frequencies from the uplink RF signal and separating each sub band into a respective number of channels; and
transmitting each of the channels to the base station.
